# EUROPEAN PATENT SPECIFICATION

(11) **EP 4 375 005 B1**
(45) Date of publication and mention of the grant of the patent: **13.05.2026**
(21) Application number: 23736587.9
(22) Date of filing: 21.03.2023
(51) Int. Cl.: B23K 26/142, B23K 26/22, B08B 15/04, B23K 37/04, B23K 101/36, H01M 10/04

(54) **WELDING POSITIONING APPARATUS**
SCHWEISSPOSITIONIERUNGSVORRICHTUNG
DISPOSITIF DE POSITIONNEMENT POUR SOUDAGE

(30) Priority: 27.09.2022 CN 202222555478 U
(43) Date of publication of application: 29.05.2024
(73) Proprietor: Contemporary Amperex Technology (Hong Kong) Limited, Central, Central And Western District (HK)
(72) Inventor: LIU, Kun, Ningde, Fujian 352100 (CN); SONG, Lei, Ningde, Fujian 352100 (CN); ZHONG, Guangcheng, Ningde, Fujian 352100 (CN); CHEN, Xiaowen, Ningde, Fujian 352100 (CN)
(74) Representative: Gong, Jinping
(86) International application number: PCT/CN2023/082717
(87) International publication number: WO 2024/066239

(56) References cited:
- CN-A- 109 954 971
- CN-A- 109 954 971
- CN-A- 111 037 093
- CN-A- 111 037 093
- CN-A- 112 975 176
- CN-A- 113 130 964
- CN-A- 113 130 964
- CN-U- 211 588 905
- CN-U- 214 558 262
- CN-U- 215 145 891
- CN-U- 215 432 118
- CN-U- 218 136 063
- JP-A- 2019 130 556

## Description

The present invention refers to the Chinese patent application No. 202222555478.3 filed on September 27, 2022 and entitled "WELDING POSITIONING APPARATUS".

### Technical Field

The present invention relates to the field of battery manufacturing technologies, and in particular to a welding positioning apparatus as specified in any of claims 1-8.

### Background

During manufacturing of a battery cell, connector pieces need to be welded to a top cover, so that tabs in an electrode assembly are led out to electrode terminals on the top cover through the connector pieces to realize the input and output of electrical energy in the battery cell. CN111037093A relates to a welding device. CN113130964A relates to a butterfly welding equipment.

In a welding process of the connector pieces and the top cover, dust generated not only affects the welding quality, but also pollutes the battery cell and affects performance of the battery cell.

### Summary of the Invention

The claimed subject-matter is defined by the appended claims. Based on this, it is necessary to provide a welding positioning apparatus for solving the problem that dust generated in the welding process affects welding quality and pollutes a battery cell.

In a first aspect, the present invention provides a welding positioning apparatus as specified in any of claims 1-8 for positioning a first component and a second component to be welded. The welding positioning apparatus is defined in claim 1.

In the technical solution of this invention the first component is pressed against the second component through the press head to achieve a stable connection between the two, and the welding channel provides a penetration path for a laser beam for laser welding, enabling the laser beam to smoothly reach the welding position of the first component and the second component to achieve smooth welding of the first component and the second component. Moreover, the dust collection chamber communicates with the welding channel, so that the dust collection chamber is capable of collecting dust generated during welding without affecting the welding process, and transferring the dust to the outside of the welding positioning apparatus through the dust removal port, thereby achieving dust removal in the welding process, ensuring a clean welding environment and improving the welding quality.

In some embodiments, the welding positioning apparatus comprises an elastic element, the elastic element being deformably connected between the main body and the press head in a pressing direction of the press head.

In the technical solution of the embodiments of the present invention the elastic element makes a connection between the first component and the second component more stable, and makes the welding process smoother. In addition, the press head is elastically pressed against the first component and the second component, so that a pressing force of the press head against the first component and the second component is allowed to be adjusted more flexibly, improving stability in positioning.

In the technical solution of the embodiments of the present invention the bottom plate is capable of providing a mounting base for the main body. When the main body is detachably assembled to one side of the bottom plate, the welding groove on the bottom plate is opposite and communicates with the welding operation inlet disposed on the main body. Therefore, a laser beam during laser welding is allowed to smoothly enter the welding channel through the welding groove, to realize welding of the first component and the second component. In addition, each dust removal port communicates with an external dust extractor through the dust suction pipe, so that the dust in the dust collection chamber is smoothly discharged under the action of the dust extractor.

In some embodiments, two dust suction pipes are provided, one of the dust suction pipes is fitted to one side of the press head in a direction intersecting the welding channel and communicates with the dust collection chamber, and the other of the dust suction pipe is fitted to the main body in a direction parallel to the welding channel and communicates with the dust collection chamber.

In the technical solution of the embodiments of the present invention the abovementioned structure enables more thorough removal of the dust in the dust collection chamber, further ensuring a clean welding environment and improving the welding quality.

In some embodiments, the welding positioning apparatus further comprises a position-limit member disposed on the bottom plate, the position-limit member being connected between the bottom plate and the main body and used to restrict the main body to the bottom plate.

In the technical solution of the embodiments of the present invention the position-limit member enables quick positioning of the main body on the bottom plate and quick and accurate connection between the main body and bottom plate.

In some embodiments, the position-limit member is constructed as a first positioning pin protruding from the bottom plate, and a first groove matching the first positioning pin is disposed on a surface of the main body facing toward the bottom plate.

In the technical solution of the embodiments of the present invention quick positioning of the main body on the bottom plate may be achieved, and the position of the main body on the bottom plate may be quickly determined, so that efficiency of assembly between the main body and the bottom plate is improved.

In some embodiments, the welding positioning apparatus further comprises a first movable member and a second movable member respectively disposed on two sides of the main body in a preset direction, and a mounting position with an adjustable spacing in the preset direction is defined between the first movable member and the second movable member and used for mounting the main body.

In the technical solution of the embodiments of the present invention the first movable member and the second movable member are capable of limiting the main body in the preset direction, so that the main body is more stably disposed on the bottom plate, and connection stability between the main body and the bottom plate is improved.

In some embodiments, the first movable member and the second movable member are both constructed as movable cylinders.

In the technical solution of the embodiments of the present invention when the movable cylinders are close to each other, the main body is allowed to be limited in the preset direction and then fixed to the bottom plate, so that positioning of the first component and the second component is achieved.

In some embodiments, a second positioning pin protrudes from a surface of the first movable member facing toward the main body, and a second groove matching the second positioning pin is disposed on a surface of the main body facing toward the first movable member; and/or a third positioning pin protrudes from a surface of the second movable member facing toward the main body, and a third groove matching the third positioning pin is disposed on a surface of the main body facing toward the second movable member.

In the technical solution of the embodiments of the present invention the abovementioned structure enables a further improvement of stability in connection between the first movable member and the second movable member and the main body, so that the main body is more stably disposed on the bottom plate. Therefore, in the welding process, the main body may better accurately position the first component and the second component, making the welding process smoother.

In the technical solution of the embodiments of the present invention the two press heads may be arranged corresponding to the two connector pieces respectively, and position the connector pieces to a positive electrode terminal or a negative electrode terminal via one-to-one correspondence, thereby facilitating the welding of the connector pieces with the positive electrode terminal or the negative electrode terminal.

In the technical solution of the embodiments of the present invention the two movable cylinders are capable of clamping or releasing the main body in the width direction of the top cover, so that the main body is allowed to be fixed in the mounting position or removed from the mounting position, and replacement of the main body is facilitated.

In the technical solution of the embodiments of the invention on the one hand, the two dust suction pipes are capable of limiting the main body in the length direction of the top cover, and when used together with the two movable cylinders, the two dust suction pipes allow the main body to be stably limited in the mounting position, making the main body more stable for the positioning of the top cover and the connector pieces in the welding process. On the other hand, the two dust suction pipes may respectively communicate with the external dust extractor to respectively discharge dust in two separate dust collection chambers. Therefore, during dust removal, the dust in the two independent dust collection chambers does not affect each other, and mutual interference of the dust in the two dust collection chambers is avoided, so that the dust removal effect is improved.

In the welding positioning apparatus described above, the press head is capable of pressing the first component to be welded against the second component, enabling smooth welding of the first component and the second component. During welding, dust generated during welding is allowed to be collected in the dust collection chambers, and discharged to the outside of the welding positioning apparatus by the external dust extractor to keep the welding environment clean, thereby improving the welding quality. Moreover, since dust is cleaned during welding, dust pollution to the battery cell is avoided and performance of the battery cell is improved.

The above description is only a summary of the technical solutions of the present invention. In order to be able to understand the technical means of the present invention more clearly, the technical means can be implemented according to the content of the specification. Furthermore, to make the above and other objectives, features and advantages of the present invention more comprehensible, specific implementations of the present invention are exemplified below.

### Description of Drawings

Various other advantages and benefits will become apparent to those of ordinary skill in the art upon reading the following detailed description of the embodiments. The accompanying drawings are merely intended to illustrate the embodiments and are not intended to limit this invention. In addition, the like components are denoted by the like reference numerals throughout the drawings. In the accompanying drawings:
Fig. 1 is a schematic diagram of the overall structure of a welding positioning apparatus according to one or more embodiments;
Fig. 2 is cross-sectional view of a welding positioning apparatus according to one or more embodiments;
Fig. 3 is a schematic structural diagram of a main body and press heads according to one or more embodiments;
Fig. 4 is a schematic exploded structural diagram of a welding positioning apparatus according to one or more embodiments;
Fig. 5 is a schematic exploded structural diagram of a welding positioning apparatus according to one or more embodiments;
Fig. 6 is a schematic structural diagram of a main body and press heads according to one or more embodiments; and
Fig. 7 is a structural schematic diagram of a welding positioning apparatus connected to a top cover and connector pieces according to one or more embodiments.

100 - welding positioning apparatus; 200 - top cover; 300 - connector piece; 10 - main body; 20 - press head; 30 - elastic element; 40 - bottom plate; 50 - dust suction pipe; 60 - position-limit member; 70 - first movable member; 80 - second movable member; 11 - welding operation inlet; 12 - second groove; 13 - third groove; 21 - connecting end; 22 - positioning end; 23 - dust removal port; 24 - inner cavity ; 41 - welding groove; 71 - second positioning pin; 81 - third positioning pin; 221 - welding operation outlet; and a - preset direction.

### Detailed Description

Examples of the technical solutions of the present invention will be described in detail below in conjunction with the drawings. The following embodiments are only used to more clearly illustrate the technical solution of the present invention, and therefore are only used as examples and cannot be used to limit the scope of protection of the present invention.

Unless otherwise defined, all technical and scientific terms used herein have the same meaning as commonly understood by those skilled in the art belonging to the technical field of the present invention; the terms used herein are intended only for the purpose of describing specific examples and are not intended to limit the present invention; the terms "comprising" and "having" and any variations thereof in the specification and the claims of the present invention and in the description of drawings above are intended to cover non-exclusive inclusion.

In the description of the embodiments of the present invention, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present invention, the meaning of "a plurality of" is two or more, unless otherwise explicitly and specifically defined.

Reference herein to "an embodiment" means that a particular feature, structure, or characteristic described in connection with the embodiment can be comprised in at least one embodiment of the present invention. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present invention, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present invention, the term "a plurality of" refers to two or more (comprising two), and similarly, "multiple groups" refers to two or more (comprising two) groups, and "multiple sheets" refers to two or more (comprising two) sheets.

In the description of the embodiments of the present invention, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present invention and simplify the description only, rather than indicating or implying that the device or element referred to must have a particular orientation or be constructed and operated in a particular orientation, and therefore are not to be interpreted as limitations on the embodiments of the present invention.

In the description of the embodiments of the present invention, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present invention can be understood according to specific situations.

At present, from the perspective of the development of the market situation, power batteries are more and more widely used. The power batteries are used in energy storage power source systems such as hydraulic, thermal, wind and solar power stations as well as in electric vehicles such as electric bicycles, electric motorcycles and electric cars, and other fields. With the continuous expansion of the application field of the power batteries, the market demand is also constantly expanding.

A battery cell is the smallest unit comprised in a battery. In the battery, there may be a plurality of battery cells, and the plurality of battery cells may be connected in series or parallel or in a mixed connection, where the mixed connection means that the plurality of battery cells are connected in both series and parallel.

For the structure of the battery cell, it usually comprises a top cover, a case, an electrode assembly, and other functional components. The top cover refers to a component that covers an opening of the case to isolate internal environment of the battery cell from external environment. The electrode assembly is a component of the battery cell where an electrochemical reaction takes place, and mainly comprises a positive electrode sheet, a negative electrode sheet, and a separator between the positive and negative electrode sheets. The part of the positive and negative electrode sheets that has active substance constitutes a body portion of the electrode assembly. The parts that do not have active substances each constitute a positive tab and a negative tab.

Functional components such as electrode terminals may be disposed on the top cover. The positive and negative tabs on the electrode assembly are connected to the electrode terminals on the top cover by means of connector pieces, to form a smooth current circuit during charging and discharging of the battery cell.

In order to make a connection between the positive and negative tabs and the electrode terminals more stable, the connector pieces each are usually fixed to the top cover by laser welding, and the positive and negative tabs are then connected to the connector pieces.

The applicant notes that a large amount of dust and particles are generated in the welding process between the connector pieces and the top cover, if the dust and particles move to a position between faces of weld of the connector pieces and the top cover, welding defects such as porosity and blowholes may be caused on the faces of weld of the two, affecting the welding quality. In addition, the dust and particles may also enter the interior of the battery cell to pollute the battery cell.

Based on the above considerations, in order to solve the problem that the dust and particles generated in the welding process affect the welding quality and pollute the battery cell, according to one or embodiments of the present invention, a welding positioning apparatus is provided. During welding, the dust and particles generated in the welding process are discharged through a dust removal channel, so that a clean welding environment is kept and the welding quality is improved, and moreover, pollution to the battery cell caused by pollutants such as dust and particles is avoided and performance of the battery cell is improved.

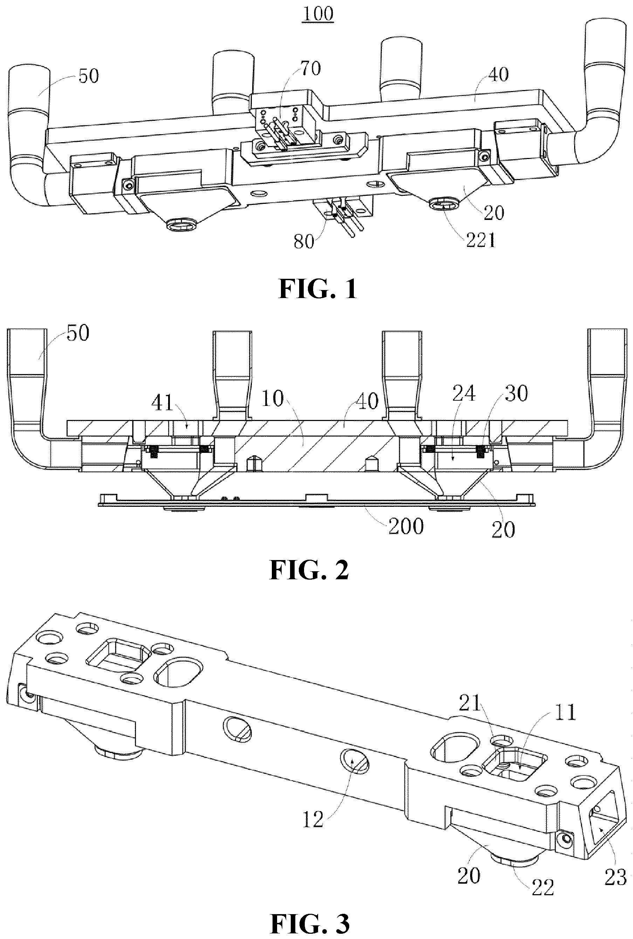

With reference to Figs. 1, 2 and 3, an embodiment of the present invention provides a welding positioning apparatus 100 for positioning a first component and a second component to be welded. The welding positioning apparatus 100 comprises a main body 10 and a press head 20. The main body 10 is penetratingly provided with a welding operation inlet 11. The press head 20 comprises a connecting end 21 and a positioning end 22 arranged opposite each other. The connecting end 21 is detachably assembled to one side of the main body 10 and communicates with the welding operation inlet 11. The positioning end 22 presses the first component against the second component and is provided with a welding operation outlet 221 communicating with a position to be welded. A part of an inner cavity 24 of the press head 20 is constructed to form a welding channel defined with the welding operation inlet 11 and a welding operation outlet 221, and the other part is constructed as a dust collection chamber communicating with the welding channel. The press head 20 is penetratingly provided with at least one dust removal port 23 communicating with the dust collection chamber. The dust removal port 23 is used to transfer dust collected in the dust collection chamber during welding.

It should be noted that, in an actual welding process, the dust removal port 23 may communicate with an external dust extractor, and the dust collected in the dust collection chamber is discharged through the dust extractor, thereby ensuring a clean welding environment. The welding channel is a structure through which a laser beam for laser welding passes smoothly to weld the first component to the second component.

The connecting end 21 of the press head 20 is detachably assembled to one side of the main body 10. When the press head 20 is connected to the main body 10, the connecting end 21 communicates with the welding operation inlet 11. It is to be understood that, the connecting end 21 may be set as an opening end. When the connecting end 21 is assembled to one side of the main body 10, the opening of the connecting end 21 communicates with the welding operation inlet 11.

The positioning end 22 of the press head 20 has a contour shape matching that of the first component, so that the first component is pressed against the second component more stably. In addition, the positioning end 22 of the press head 20 is provided with the welding operation outlet 221. When the positioning end 22 is in contact with the first component, the welding operation outlet 221 on the positioning end 22 is located opposite and mutually communicates with the position to be welded of the first component and the second component.

In this way, in the welding process, the laser beam for laser welding is allowed to reach the welding position of the first component and the second component through the welding channel defined by the welding operation inlet 11, a part of the inner cavity of the press head 20, and the welding operation outlet 221 together, to achieve smooth welding of the first component and the second component.

The press head 20 presses the first component against the second component to achieve a stable connection between the two components. The welding channel provides a penetration path for the laser beam for laser welding, enabling the laser beam to smoothly reach the welding position of the first component and the second component to achieve smooth welding of the first component and the second component. Moreover, the dust collection chamber communicates with the welding channel, so that the dust collection chamber is capable of collecting dust generated during welding without affecting the welding process, and transferring the dust to the outside of the welding positioning apparatus 100 through the dust removal port 23, thereby realizing dust removal in the welding process, ensuring a clean welding environment and improving the welding quality.

In some embodiments, the welding positioning apparatus 100 comprises an elastic element 30, the elastic element 30 being deformably connected between the main body 10 and the press head 20 in a pressing direction of the press head 20.

It should be noted that when the press 20 presses the first component against the second component, the press head 20, the first component and the second component, which are all of rigid structures, may cause damage to the structures of the first component and the second component in the case of an excessive pressing force from the press head 20. In the case of a low pressing force from the press head 20, an unstable connection between the first component and the second component may be caused, affecting the welding effect.

Based on this, the elastic element 30 is deformably connected between the main body 10 and the press head 20 in a pressing direction of the press head 20, enabling a more stable connection between the first component and the second component and making the welding process smoother. In addition, the press head 20 elastically presses the first component and the second component, so that a pressing force of the press head 20 against the first component and the second component is adjusted more flexibly, improving stability in positioning.

Specifically, the elastic element 30 may be constructed as a spring, that is, a spring capable of deforming in the pressing direction of the press head 20 is arranged between the main body 10 and the press head 20, so that the press head 20 is capable of pressing the first component and the second component elastically. It is to be understood that the elastic element 30 may also be of other elastic structure other than a spring, such as a rubber pad elastically connected between the press head 20 and the main body 10. This will not be repeated here.

In some embodiments, the welding positioning apparatus 100 comprises a bottom plate 40 and at least one dust suction pipe 50. The bottom plate 40 is penetratingly provided with a welding groove 41, the main body 10 is detachably assembled to one side of the bottom plate 40, the welding operation inlet 11 is opposite and communicates with the welding groove 41, and each dust suction pipe 50 is jointed and communicates with each dust removal port 23.

The bottom plate 40 is capable of providing a mounting base for the main body 10. When the main body 10 is detachably assembled to one side of the bottom plate 40, the welding groove 41 on the bottom plate 40 is opposite and communicates with the welding operation inlet 11 disposed on the main body 10. Therefore, a laser beam during laser welding is allowed to smoothly enter the welding channel through the welding groove 41, to realize welding of the first component and the second component.

In addition, each dust removal port 23 communicates with an external dust extractor through the dust suction pipe 50, so that the dust in the dust collection chamber is smoothly discharged under the action of the dust extractor.

In some embodiments, two dust suction pipes 50 are provided. One of the dust suction pipes 50 is fitted to one side of the press head 20 in a direction intersecting the welding channel and communicates with the dust collection chamber, and the other of the dust suction pipes 50 is fitted to the main body 10 in a direction parallel to the welding channel and communicates with the dust collection chamber.

Specifically, when the dust suction pipes 50 are respectively connected to the external dust extractor, the dust suction pipe 50 fitted to one side of the press head 20 in the direction intersecting the welding channel is capable of sucking dust in the dust collection chamber in the direction intersecting the welding channel; the dust suction pipe 50 fitted to the main body 10 in a direction parallel to the welding channel is capable of sucking dust in the dust collection chamber in the direction parallel to the welding channel.

The abovementioned structure enables more thorough removal of the dust in the dust collection chambers, further ensuring a clean welding environment and improving the welding quality.

It should be noted that more than two dust suction pipes 50 may be provided, the dust suction pipes 50 are respectively arranged in the direction intersecting the welding channel and in the direction parallel to the welding channel, so that the dust in the dust collection chambers is cleaned more thoroughly. The specific number of dust suction pipes 50 may be adjusted according to the actual use, which is not described here.

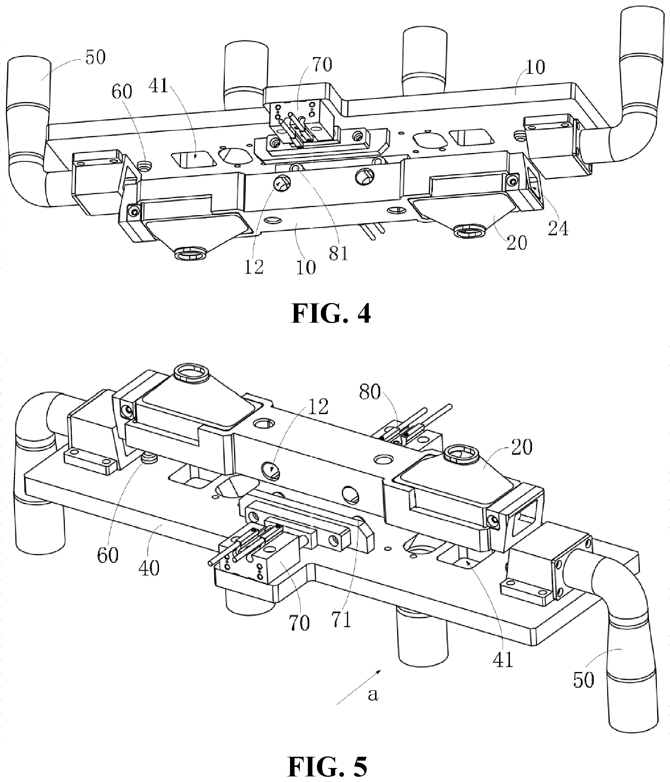

With reference to Fig. 4, in some embodiments, the welding positioning apparatus 100 further comprises a position-limit member 60 disposed on the bottom plate 40, the position-limit member 60 being connected between the bottom plate 40 and the main body 10 and used to restrict the main body 10 to the bottom plate 40.

It should be noted that the main body 10 is detachably disposed on the bottom plate 40, so that the main body 10 and the bottom plate 40 are connected more flexibly. Specifically, the shape and size of different first and second components may change in the welding process, so it is necessary to improve the practicality of the welding positioning apparatus 100 by replacing different main bodies 10 to achieve pressing against different first and second components.

Based on the above, the position-limit member 60 enables quick positioning of the main body 10 on the bottom plate 40 and quick and accurate connection between the main body 10 and bottom plate 40.

In some embodiments, the position-limit member 60 is constructed as a first positioning pin protruding from the bottom plate 40, and a first groove matching the first positioning pin is disposed on a surface of the main body 10 facing toward the bottom plate 40.

When connecting the main body 10 to the bottom plate 40, the first positioning pin is inserted into the first groove to achieve quick positioning of the main body 10 on the bottom plate 40, so that the position of the main body 10 on the bottom plate 40 may be determined quickly, and efficiency of assembly between the main body 10 and the bottom plate 40 is improved.

As shown in Fig. 5, in some embodiments, the welding positioning apparatus 100 further comprises a first movable member 70 and a second movable member 80 respectively disposed on two sides of the main body 10 in a preset direction a. A mounting position with an adjustable spacing in the preset direction a is defined between the first movable member 70 and the second movable member 80 and used for mounting the main body 10.

Specifically, the preset direction a is perpendicular to a penetration direction of the welding channel. The first movable member 70 and the second movable member 80 are respectively disposed on opposite sides of the main body 10 in the preset direction a. When the first movable member 70 and the second movable member 80 are close to each other, the spacing of the mounting position in the preset direction a becomes smaller, and accordingly the main body 10 is fixed to the mounting position by the first movable member 70 and the second movable member 80. When the first movable member 70 and the second movable member 80 are away from each other, the spacing of the mounting position in the preset direction a becomes larger, the main body 10 is allowed to be removed from the mounting position, so that replacement of the main body 10 is facilitated.

In some embodiments, the first movable member 70 and the second movable member 80 are both constructed as movable cylinders.

Specifically, when the two movable cylinders located in the predetermined direction a on opposite sides of the main body 10 are close to each other, the main body 10 at the mounting position is allowed to be limited in the preset direction a, so that the main body 10 is stably arranged at the mounting position.

It should be noted that the first movable member 70 and the second movable member 80 may also be of other structures, for example, they may be telescopic rods located in the preset direction a on opposite sides of the main body 10, and the telescopic rods on both sides are capable of extending in a direction close to the main body 10, facilitating fixing the main body 10 to the mounting position.

Refer to Figs. 3, 4, 5 and 6 together. In some embodiments, a second positioning pin 71 protrudes from a surface of the first movable member 70 facing toward the main body 10, and a second groove 12 matching the second positioning pin 71 is disposed on a surface of the main body 10 facing toward the first movable member 70. And/or a third positioning pin 81 protrudes from a surface of the second movable member 80 facing toward the main body 10, and a third groove 13 matching the third positioning pin 81 is disposed on a surface of the main body 10 facing toward the second movable member 80.

When the first movable member 70 abuts against the main body 10, the second positioning pin 71 on the first movable member 70 is inserted into the second groove 12 on the main body 10 to make a connection between the main body 10 and the first movable member 70 more stable and avoid relative displacement of the two. When the second movable member 80 abuts against the main body 10, the third positioning pin 81 on the second movable member 80 is inserted into the third groove 13 on the main body 10 to make a connection between the main body 10 and the second movable member 80 more stable and avoid relative displacement of the two.

The abovementioned structure enables a further improvement of stability in connection between the first movable member 70 and the second movable member 80 and the main body 10, so that the main body 10 is more stably disposed on the bottom plate 40. Therefore, in the welding process, the main body 10 is capable of better positioning the first component and the second component accurately, making the welding process smoother.

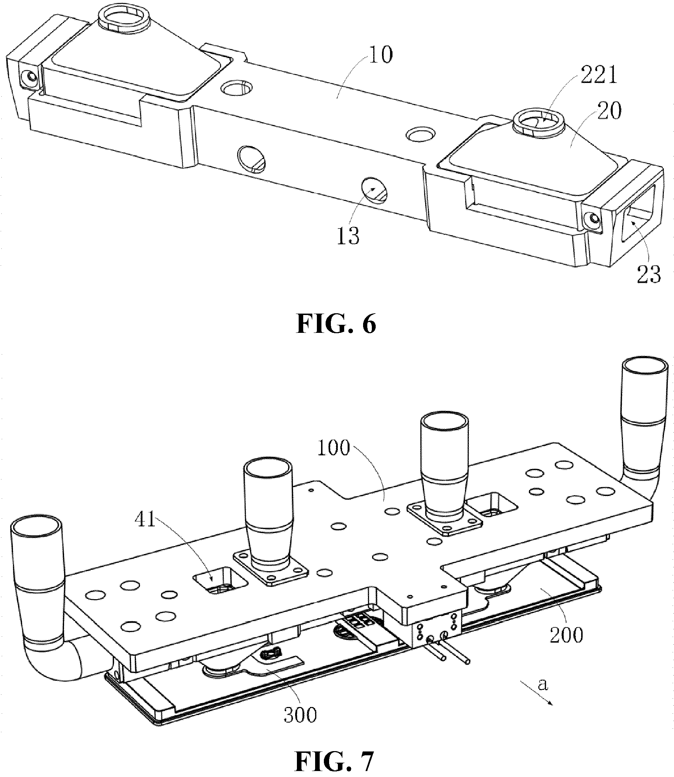

Refer to Figs. 1 and 7 in combination. In some embodiments, the first component is constructed as a top cover 200 of a battery cell, the second component is constructed as two connector pieces 300, welded to the top cover 200, in the battery cell, and two press heads 20 are provided, the two press heads 20 being respectively used to position the two connector pieces 300 onto the top cover 200. The two press heads 20 are assembled to two ends of the main body 10 in a length direction of the top cover 200.

It should be noted that when the welding positioning apparatus 100 is applied to the welding of the connector pieces 300 of the battery cell with the top cover 200, the top cover 200 is provided with a positive electrode terminal and a negative electrode terminal that are used to be connected the positive tab and the negative tab of the electrode assembly, respectively. Therefore, in the welding process, welding between one connector piece 300 and the positive electrode terminal and welding between the other connector piece 300 and the negative electrode terminal are required to be performed at the same time.

Based on this, the two press heads 20 may be arranged corresponding to the two connector pieces 300 respectively, and position the connector pieces 300 to the positive electrode terminal or the negative electrode terminal via one-to-one correspondence, thereby facilitating the welding of the connector pieces 300 with the positive electrode terminal or the negative electrode terminal.

Further, in the case that two press heads 20 are provided, two welding operation inlets 11 are penetratingly disposed in the main body 10, and communicate with the connecting ends 21 of the two press heads 20 via one-to-one correspondence. One welding channel is defined by a part of the inner cavity in each press head 20, the corresponding welding operation inlet 11 and welding operation outlet 221 together. That is, two welding channels separated from each other are provided, for the welding between one connector piece 300 and the positive electrode terminal, and the welding between the other connector piece 300 and the negative electrode terminal, respectively.

Moreover, two dust collection chambers separated from each other are also provided. Each dust collection chamber communicates with at least one dust removal port 23 to facilitate discharging dust collected in the dust collection chamber through the dust removal port 23.

In some embodiments, the welding positioning apparatus 100 further comprises two movable cylinders 40 disposed on the bottom plate, the two movable cylinders being mounted on the bottom plate 40 in a width direction of the top cover 200 and clamping or releasing the main body 10 in the width direction of the top cover 200.

Specifically, the two movable cylinders, i.e., the first movable member 70 and the second movable member 80, are capable of clamping or releasing the main body 10 in the width direction of the top cover 200, so that the main body 10 is allowed to be fixed in the mounting position or removed from the mounting position, and replacement of the main body 10 is facilitated.

In some embodiments, two dust suction pipes 50 are provided, the two dust suction pipes 50 being mounted at opposite ends of the bottom plate 40 in the width direction of the top cover 200 and used to limit the main body 10 in the length of the top cover 200.

On the one hand, the two dust suction pipes 50 are capable of limiting the main body 10 in the length direction of the top cover 200, and when used together with the two movable cylinders, the two dust suction pipes allow the main body 10 to be stably limited in the mounting position, making the main body 10 more stable for the positioning of the top cover 200 and the connector piece 300 in the welding process.

On the other hand, the two dust suction pipes 50 may respectively communicate with the external dust extractor to discharge dust in two separate dust collection chambers, respectively. Therefore, during dust removal, the dust in the two independent dust collection chambers does not affect each other, and mutual interference of the dust in the two dust collection chambers is avoided, so that the dust removal effect is improved.

In addition, four dust suction pipes 50 may be provided. Two of the dust suction pipes 50 are mounted at opposite ends of the bottom plate 40 in the length direction of the top cover 200, and the other two dust suction pipes 50 are mounted on the bottom plate 40 in a thickness direction of the top cover 200. As a result, the two dust suction pipes 50 mounted in the length direction of the top cover 200 are capable of cleaning dust from two separate dust collection chambers in a direction perpendicular to the welding channels. The two dust suction pipes 50 mounted in the length direction of the top cover 200 are capable of cleaning dust from two separate dust collection chambers in a direction parallel to the welding channels, thereby improving dust removal efficiency and making dust removal more thorough.

According to some embodiments of the present invention, when welding the connector piece 300 and the top cover 200, the connector piece 300 is first pressed against the top cover 200 by the press head 20 to complete the positioning between the connector piece 300 and the top cover 200. After the positioning, the welding process is started. A laser beam passes through the welding channel to reach faces of weld of the connector piece 300 and the top cover 200, to realize welding connection between the two.

In this case, each dust suction pipe 50 communicates with the external dust extractor. Under the action of the dust extractor, the dust in the dust collection chamber is exhausted through each dust removal port 23, so that a clean welding environment is ensured, the welding quality is improved, and dust pollution to the battery cell is avoided.

In addition, when it is necessary to weld different top cover 200, only the first movable member 70 and the second movable member 80 need to be adjusted. The two movable members are allowed to be away from each other and the main body 10 on the bottom plate 40 is removed. Then a new main body 10 is mounted. The first movable member 70 and the second movable member 80 are adjusted to be close to each other so as to fix the main body 10 to the bottom plate 40. Then, it is ready to start welding.

Finally, it should be noted that the above embodiments are merely used for illustrating rather than limiting the technical solutions of the present invention.

## Claims

1. A welding positioning apparatus (100) for positioning a first component and a second component to be welded, the welding positioning apparatus (100) comprising:
a main body (10) penetratingly provided with a welding operation inlet (11); and
a press head (20) comprising a connecting end (21) and a positioning end (22) arranged opposite each other, the connecting end (21) being detachably assembled to one side of the main body (10) and communicating with the welding operation inlet (11), and the positioning end (22) pressing the first component against the second component and being provided with a welding operation outlet (221) communicating with a position to be welded;
wherein a part of an inner cavity (24) of the press head (20) is constructed to form a welding channel defined with the welding operation inlet (11) and the welding operation outlet (221), and the other part is constructed as a dust collection chamber communicating with the welding channel; and
the press head (20) is penetratingly provided with at least one dust removal port (23) communicating with the dust collection chamber, and the dust removal port (23) is used to transfer dust collected in the dust collection chamber during welding;
wherein the welding positioning apparatus (100) comprises a bottom plate (40) and at least one dust suction pipe (50), the bottom plate (40) is penetratingly provided with a welding groove (41), the main body (10) is detachably assembled to one side of the bottom plate (40), the welding operation inlet (11) is opposite and communicates with the welding groove (41), and each of the dust suction pipes (50) is jointed and communicates with each of the dust removal ports (23);
wherein the first component is constructed as a top cover (200) of a battery cell, the second component is constructed as two connector pieces (300) , welded to the top cover (200), in the battery cell, and two press heads (20) are provided, the two press heads (20) being respectively used to position the two connector pieces (300) onto the top cover (200);
wherein two the press heads (20) are assembled to both ends of the main body (10) in a length direction of the top cover (200);
wherein two dust suction pipes (50) are provided, the two dust suction pipes (50) being mounted at opposite ends of the bottom plate (40) in the length direction of the top cover (200) and used to limit the main body (10) in the length of the top cover (200); and
wherein the welding positioning apparatus (100) further comprises two movable cylinders disposed on the bottom plate (40), the two movable cylinders being mounted on the bottom plate (40) in a width direction of the top cover (200) and clamping or releasing the main body (10) in the width direction of the top cover (200).

2. The welding positioning apparatus (100) according to claim 1, wherein the welding positioning apparatus (100) comprises an elastic element (30), the elastic element (30) being deformably connected between the main body (10) and the press head (20) in a pressing direction of the press head (20).

3. The welding positioning apparatus (100) according to claim 1 or 2, wherein two dust suction pipes (50) are provided, one of the dust suction pipes (50) is fitted to one side of the press head (20) in a direction intersecting the welding channel and communicates with the dust collection chamber, and the other of the dust suction pipes (50) is fitted to the main body (10) in a direction parallel to the welding channel and communicates with the dust collection chamber.

4. The welding positioning apparatus (100) according to claim 1 or 3, wherein the welding positioning apparatus (100) further comprises a position-limit member (60) disposed on the bottom plate (40), the position-limit member (60) being connected between the bottom plate (40) and the main body (10) and used to restrict the main body (10) to the bottom plate (40).

5. The welding positioning apparatus (100) according to claim 4, wherein the position-limit member (60) is constructed as a first positioning pin protruding from the bottom plate (40), and a first groove matching the first positioning pin is disposed on a surface of the main body (10) facing toward the bottom plate (40).

6. The welding positioning apparatus (100) according to any one of claims 1-5, wherein the welding positioning apparatus (100) further comprises a first movable member (70) and a second movable member (80) respectively disposed on two sides of the main body (10) in a preset direction (a), and a mounting position with an adjustable spacing in the preset direction (a) is defined between the first movable member (70) and the second movable member (80) and used for mounting the main body (10).

7. The welding positioning apparatus (100) according to claim 6, wherein the first movable member (70) and the second movable member (80) are both constructed as movable cylinders.

8. The welding positioning apparatus (100) according to claim 6 or 7, wherein a second positioning pin (71) protrudes from a surface of the first movable member (70) facing toward the main body (10), and a second groove (12) matching the second positioning pin (71) is disposed on a surface of the main body (10) facing toward the first movable member (70);
and/or a third positioning pin (81) protrudes from a surface of the second movable member (80) facing toward the main body (10), and a third groove (13) matching the third positioning pin (81) is disposed on a surface of the main body (10) facing toward the second movable member (80).

## Patentansprüche

1. Schweißpositionierungsvorrichtung (100) zum Positionieren einer ersten und einer zweiten zu schweißenden Komponente, wobei die Schweißpositionierungsvorrichtung (100) Folgendes umfasst:
einen Hauptkörper (10), der durchdringend mit einem Schweißvorgangseinlass (11) versehen ist; und
einen Presskopf (20), der ein Verbindungsende (21) und ein Positionierungsende (22) umfasst, die einander gegenüberliegend angeordnet sind, wobei das Verbindungsende (21) lösbar an einer Seite des Hauptkörpers (10) montiert ist und mit dem Schweißvorgangseinlass (11) kommuniziert und
das Positionierungsende (22) die erste Komponente gegen die zweite Komponente presst und mit einem Schweißvorgangsauslass (221) versehen ist, der mit einer zu verschweißenden Position kommuniziert;
wobei ein Teil eines inneren Hohlraums (24) des Presskopfes (20) so konstruiert ist, dass er einen Schweißkanal bildet, der mit dem Schweißvorgangseinlass (11) und dem Schweißvorgangsauslass (221) definiert ist, und der andere Teil als Staubsammelkammer konstruiert ist, die mit dem Schweißkanal kommuniziert; und
der Presskopf (20) durchdringend mit mindestens einer Entstaubungsöffnung (23) versehen ist, die mit der Staubsammelkammer kommuniziert, und die Entstaubungsöffnung (23) dazu dient, während des Schweißens in der Staubsammelkammer gesammelten Staub zu übertragen;
wobei die Schweißpositionierungsvorrichtung (100) eine Bodenplatte (40) und mindestens ein Staubabsaugrohr (50) umfasst, die Bodenplatte (40) durchdringend mit einer Schweißnut (41) versehen ist, der Hauptkörper (10) lösbar an einer Seite der Bodenplatte (40) montiert ist, der Schweißvorgangseinlass (11) gegenüberliegend ist und mit der Schweißnut (41) kommuniziert und jedes der Staubabsaugrohre (50) mit jeder Entstaubungsöffnung (23) verbunden ist und kommuniziert;
wobei die erste Komponente als obere Abdeckung (200) einer Batteriezelle konstruiert ist, die zweite Komponente als zwei mit der oberen Abdeckung (200) verschweißte Anschlussstücke (300) in der Batteriezelle konstruiert ist und zwei Pressköpfe (20) vorgesehen sind, wobei die zwei Pressköpfe (20) jeweils verwendet werden, um die zwei Anschlussstücke (300) auf der oberen Abdeckung (200) zu positionieren;
wobei zwei Pressköpfe (20) an beiden Enden des Hauptkörpers (10) in einer Längsrichtung der oberen Abdeckung (200) montiert sind;
wobei zwei Staubabsaugrohre (50) vorgesehen sind, wobei die beiden Staubabsaugrohre (50) an gegenüberliegenden Enden der Bodenplatte (40) in Längsrichtung der oberen Abdeckung (200) montiert sind und dazu dienen, den Hauptkörper (10) in der Länge der oberen Abdeckung (200) zu begrenzen; und
wobei die Schweißpositionierungsvorrichtung (100) ferner zwei bewegliche Zylinder umfasst, die an der Bodenplatte (40) angeordnet sind, wobei die zwei beweglichen Zylinder an der Bodenplatte (40) in einer Breitenrichtung der oberen Abdeckung (200) montiert sind und den Hauptkörper (10) in der Breitenrichtung der oberen Abdeckung (200) einspannen oder freigeben.

2. Schweißpositionierungsvorrichtung (100) nach Anspruch 1, wobei die Schweißpositionierungsvorrichtung (100) ein elastisches Element (30) umfasst, wobei das elastische Element (30) in einer Pressrichtung des Presskopfes (20) verformbar zwischen dem Hauptkörper (10) und dem Presskopf (20) verbunden ist.

3. Schweißpositionierungsvorrichtung (100) nach Anspruch 1 oder 2, wobei zwei Staubsaugrohre (50) vorgesehen sind, wobei eines der Staubsaugrohre (50) an einer Seite des Presskopfes (20) in einer Richtung angebracht ist, die den Schweißkanal schneidet und mit der Staubsammelkammer kommuniziert, und das andere der Staubsaugrohre (50) in einer Richtung parallel zum Schweißkanal am Hauptkörper (10) angebracht ist und mit der Staubsammelkammer kommuniziert.

4. Schweißpositionierungsvorrichtung (100) nach Anspruch 1 oder 3, wobei die Schweißpositionierungsvorrichtung (100) ferner ein Positionsbegrenzungselement (60) umfasst, das auf der Bodenplatte (40) angeordnet ist, wobei das Positionsbegrenzungselement (60) zwischen der Bodenplatte (40) und dem Hauptkörper (10) verbunden ist und dazu dient, den Hauptkörper (10) auf die Bodenplatte (40) zu beschränken.

5. Schweißpositionierungsvorrichtung (100) nach Anspruch 4, wobei das Positionsbegrenzungselement (60) als erster Positionierungsstift konstruiert ist, der von der Bodenplatte (40) vorsteht, und eine erste Nut, die zu dem ersten Positionierungsstift passt, auf einer Fläche des Hauptkörpers (10) angeordnet ist, die der Bodenplatte (40) zugewandt ist.

6. Schweißpositionierungsvorrichtung (100) nach einem der Ansprüche 1-5, wobei die Schweißpositionierungsvorrichtung (100) ferner ein erstes bewegliches Element (70) und ein zweites bewegliches Element (80) umfasst, die jeweils auf zwei Seiten des Hauptkörpers (10) in einer voreingestellten Richtung (a) angeordnet sind, und eine Montageposition mit einem einstellbaren Abstand in der voreingestellten Richtung (a) zwischen dem ersten beweglichen Element (70) und dem zweiten beweglichen Element (80) definiert ist und zur Montage des Hauptkörpers (10) dient.

7. Schweißpositionierungsvorrichtung (100) nach Anspruch 6, wobei das erste bewegliche Element (70) und das zweite bewegliche Element (80) beide als bewegliche Zylinder konstruiert sind.

8. Schweißpositionierungsvorrichtung (100) nach Anspruch 6 oder 7, wobei ein zweiter Positionierungsstift (71) von einer Fläche des ersten beweglichen Elements (70) vorsteht, die dem Hauptkörper (10) zugewandt ist, und eine zweite Nut (12), die zu dem zweiten Positionierungsstift (71) passt, auf einer Fläche des Hauptkörpers (10) angeordnet ist, die dem ersten beweglichen Element (70) zugewandt ist;
und/oder ein dritter Positionierungsstift (81) von einer Fläche des zweiten beweglichen Elements (80) vorsteht, die dem Hauptkörper (10) zugewandt ist, und eine dritte Nut (13), die zu dem dritten Positionierungsstift (81) passt, auf einer Fläche des Hauptkörpers (10) angeordnet ist, die dem zweiten beweglichen Element (80) zugewandt ist.

## Revendications

1. Appareil de positionnement pour soudage (100) destiné à positionner un premier composant et un second composant à souder, l'appareil de positionnement pour soudage (100) comprenant :
un corps principal (10) pourvu de manière pénétrante d'une entrée d'opération de soudage (11) ; et
une tête de presse (20) comprenant une extrémité de liaison (21) et une extrémité de positionnement (22) disposées en vis-à-vis l'une de l'autre, l'extrémité de liaison (21) étant assemblée de manière amovible sur un côté du corps principal (10) et communiquant avec l'entrée d'opération de soudage (11), et l'extrémité de positionnement (22) pressant le premier composant contre le second composant et étant pourvue d'une sortie d'opération de soudage (221) communiquant avec une position à souder ;
une partie d'une cavité interne (24) de la tête de presse (20) étant construite pour former un canal de soudage défini avec l'entrée d'opération de soudage (11) et la sortie d'opération de soudage (221), et l'autre partie étant construite comme une chambre de collecte de poussière communiquant avec le canal de soudage ; et
la tête de presse (20) étant pourvue de manière pénétrante d'au moins un orifice d'évacuation de poussière (23) communiquant avec la chambre de collecte de poussière, et l'orifice d'évacuation de poussière (23) étant utilisé pour transférer la poussière collectée dans la chambre de collecte de poussière pendant le soudage ;
l'appareil de positionnement pour soudage (100) comprenant une plaque inférieure (40) et au moins un tuyau d'aspiration de poussière (50), la plaque inférieure (40) étant pourvue de manière pénétrante d'une rainure de soudage (41), le corps principal (10) étant assemblé de manière amovible à un côté de la plaque inférieure (40), l'entrée d'opération de soudage (11) étant opposée et communiquant avec la rainure de soudage (41), et chacun des tuyaux d'aspiration de poussière (50) étant assemblé et communiquant avec chacun des orifices d'évacuation de poussière (23) ;
le premier composant étant construit comme un couvercle supérieur (200) d'un élément de batterie, le second composant étant construit comme deux pièces de connecteur (300) soudées au couvercle supérieur (200), dans l'élément de batterie, et deux têtes de presse (20) étant fournies, les deux têtes de presse (20) étant respectivement utilisées pour positionner les deux pièces de connecteur (300) sur le couvercle supérieur (200) ;
deux des têtes de presse (20) étant assemblées aux deux extrémités du corps principal (10) dans le sens de la longueur du couvercle supérieur (200) ;
deux tuyaux d'aspiration de poussière (50) étant fournis, les deux tuyaux d'aspiration de poussière (50) étant montés aux extrémités opposées de la plaque inférieure (40) dans le sens de la longueur du couvercle supérieur (200) et utilisés pour limiter le corps principal (10) dans la longueur du couvercle supérieur (200) ; et
l'appareil de positionnement pour soudage (100) comprenant en outre deux cylindres mobiles disposés sur la plaque inférieure (40), les deux cylindres mobiles étant montés sur la plaque inférieure (40) dans le sens de la largeur du couvercle supérieur (200) et serrant ou relâchant le corps principal (10) dans le sens de la largeur du couvercle supérieur (200).

2. Appareil de positionnement pour soudage (100) selon la revendication 1, l'appareil de positionnement pour soudage (100) comprenant un élément élastique (30), l'élément élastique (30) étant relié de manière déformable entre le corps principal (10) et la tête de presse (20) dans une direction de pression de la tête de presse (20).

3. Appareil de positionnement pour soudage (100) selon la revendication 1 ou 2, deux tuyaux d'aspiration de poussière (50) étant fournis, l'un des tuyaux d'aspiration de poussière (50) étant monté sur un côté de la tête de presse (20) dans une direction coupant le canal de soudage et communiquant avec la chambre de collecte de poussière, et l'autre tuyau d'aspiration de poussière (50) étant monté sur le corps principal (10) dans une direction parallèle au canal de soudage et communiquant avec la chambre de collecte de poussière.

4. Appareil de positionnement pour soudage (100) selon la revendication 1 ou 3, l'appareil de positionnement pour soudage (100) comprenant en outre un élément de limitation de position (60) disposé sur la plaque inférieure (40), l'élément de limitation de position (60) étant relié entre la plaque inférieure (40) et le corps principal (10) et utilisé pour restreindre le corps principal (10) sur la plaque inférieure (40).

5. Appareil de positionnement pour soudage (100) selon la revendication 4, l'élément de limitation de position (60) étant construit comme une première broche de positionnement faisant saillie de la plaque inférieure (40), et une première rainure correspondant à la première broche de positionnement étant disposée sur une surface du corps principal (10) faisant face à la plaque inférieure (40).

6. Appareil de positionnement pour soudage (100) selon l'une quelconque des revendications 1 à 5, l'appareil de positionnement pour soudage (100) comprenant en outre un premier élément mobile (70) et un second élément mobile (80) disposés respectivement sur deux côtés du corps principal (10) dans une direction prédéfinie (a), une position de montage avec un espacement réglable dans la direction prédéfinie (a) étant définie entre le premier élément mobile (70) et le second élément mobile (80) et utilisée pour monter le corps principal (10).

7. Appareil de positionnement pour soudage (100) selon la revendication 6, le premier élément mobile (70) et le second élément mobile (80) étant tous deux construits sous la forme de cylindres mobiles.

8. Appareil de positionnement pour soudage (100) selon la revendication 6 ou 7, une deuxième broche de positionnement (71) faisant saillie d'une surface du premier élément mobile (70) faisant face au corps principal (10), et une seconde rainure (12) correspondant à la deuxième broche de positionnement (71) étant disposée sur une surface du corps principal (10) faisant face au premier élément mobile (70) ;
et/ou une troisième broche de positionnement (81) faisant saillie d'une surface du second élément mobile (80) faisant face au corps principal (10), et une troisième rainure (13) correspondant à la troisième broche de positionnement (81) étant disposée sur une surface du corps principal (10) faisant face au second élément mobile (80).
